# EUROPÄISCHE PATENTSCHRIFT

(11) **EP 1 890 926 B1**
(45) Veröffentlichungstag und Bekanntmachung des Hinweises auf die Patenterteilung: **21.10.2009**
(21) Anmeldenummer: 06725230.4
(22) Anmeldetag: 22.03.2006
(51) Int. Cl.: B62D 3/12, B62D 5/22

(54) **ZAHNSTANGENLENKUNG MIT UNTERSCHIEDLICHEN WANDSTÄRKEN**
RACK-AND-PINION STEERING HAVING DIFFERENT WALL THICKNESSES
DIRECTION A CREMAILLERE POURVUE DE PAROIS A EPAISSEUR DIFFERENTE

(30) Priorität: 24.03.2005 EP 05102426
(43) Veröffentlichungstag der Anmeldung: 27.02.2008
(73) Patentinhaber: SchmitterChassis GmbH, 48317 Drensteinfurt (DE)
(72) Erfinder: GÜNTHER, Friedhelm, 44359 Dortmund (DE)
(74) Vertreter: Götz, Georg Alois
(86) Internationale Anmeldenummer: PCT/EP2006/060947
(87) Internationale Veröffentlichungsnummer: WO 2006/100262

(56) Entgegenhaltungen:
- EP-A- 0 343 549
- DE-A1- 19 751 408
- DE-C1- 10 047 231

## Beschreibung

Die vorliegend Erfindung bezieht sich auf eine Zahnstangenlenkung, insbesondere für Kraftfahrzeuge, gemäß Oberbegriff des Anspruchs 1.

Beim Erwerb von Kraftfahrzeugen stehen heute für den Kunden auch die Verbrauchseigenschaften im Vordergrund der Kaufentscheidung. Ein Kraftfahrzeug mit günstigen Verbrauchseigenschaften ist daher für die Modellentwicklung ein wichtiges Ziel. Ein Schritt der Verbesserung des Kraftstoffverbrauchs liegt in der Optimierung des Gewichts des Kraftfahrzeugs. Dazu ist es sinnvoll, alle Bauteile des KFZ einer Optimierung des Gewichts zu unterziehen. Weiterhin ist durch die immer komplexer werdende Motortechnik und die damit verbundene Zunahme an Bauteilen und Bauelementen die Raumausnutzung im Motorraum von immer größerer Bedeutung. Eine kompakte, raumsparende Ausführung der Bauelemente im Motorraum ist daher wünschenswert.

Da die Lenkung eines Fahrzeugs hohe Kräfte übertragen und diese auch aufnehmen können muss, insbesondere bei Lenkungen mit Hilfskrafteinrichtungen (sogenannte Servo-Lenkungen), sind die Lenkungen häufig ganz oder teilweise aus Stahl gefertigt. Es können aber auch andere Metalle wie z.B, Aluminium zum Einsatz kommen. Der Vorteil des Werkstoffs Stahl liegt in den günstigen Kosten für das Material, der guten Verarbeitbarkeit und der hohen Festigkeit, insbesondere der Duktilität des Materials. Mit einer Fertigung aus Leichtmetallen wie Aluminium lässt sich zwar Gewicht einsparen, durch die niedrigere Festigkeit wird aber ein Teil des Gewichtsvorteils wieder aufgehoben. Zusätzlich beeinflusst der hohe Preis für das Material die Wirtschaftlichkeit der Lösung. Auch die für die Bearbeitung beziehungsweise Herstellung eines Aluminiumdruckgußgehäuses für Zahnstangenlenkungen benötigten Vorrichtungen sind deutlich höher als die entsprechenden Hersteltungsmittel für Stahlintegralgehäuse.

Zudem können Aluminiumdruckgußgehäuse durch die wegen der geringeren Festigkeit von Aluminium notwendigen größeren Wandstärken nicht so kompakt fertigen wie Stahlgehäuse. Daher benötigen Druckgußgehäuse für Zahnstangenlenkungen mehr Platz im Motorraum. Ein weiterer Nachteil der Aluminiumdruckgußgehäuse sind eventuell auftretende Undichtigkeiten wegen der Gußporosität des Materials. Mit der Verwendung von unterschiedlichen Materialien, z.B. einer Kombination von Aluminium und Stahl, lassen sich diese Nachteile zwar teilweise ausgleichen, jedoch steigt der Fertigungsaufwand und damit auch wieder die Kosten. Durch Verwendung von unterschiedlichen Materialien steigt auch die Korrosionsgefahr durch Bildung von Lokalelementen, so dass die Gefahr kostspieliger Wartung und Reparatur steigt.

Auch bei der Herstellung einer Zahnstangenlenkung, insbesondere bei der Herstellung des Gehäuses, erfahren die Gehäuseteile bereits Belastungen, insbesondere durch Schweißvorgänge. So können durch Schweißen an einem dünnwandigen Rohr Geometrieänderungen durch Wärmeausdehnung und dadurch entstehende Zwängungen im Materialgefüge entstehen. Der Reduzierung der Wandstärke eines Gehäuses sind daher Grenzen gesetzt. Dazu ändern sich durch Wärmeeinwirkung auch Materialeigenschaften wie beispielsweise die Belastbarkeit des Stahls, wenn dieser vor dem Wärmeeintrag durch Kaltverformung verfestigt war. Eine lokale Erwärmung des Stahls über bestimmte Temperaturbereiche hinaus, wie sie beim Schweißen unvermeidlich ist, hebt die Verfestigung durch die Kaltverformung in diesem Bereich auf. Es ist daher im Bereich von Schweißpunkten wünschenswert, dass die Wandstärke des Gehäuses größer als die Einbrandtiefe der Schweißverbindung ist, so dass die Verfestigung durch die Kaltverformung nicht über den gesamten Wandquerschnitt beeinträchtigt wird.

Aus der DE 197 51 408 A1 sind ein Verfahren und eine Vorrichtung zur Herstellung eines Integralgehäuses für eine Hydrolenkung bekannt, das aus einem Gehäuseabschnitt zur Aufnahme eines ein Ritzel und ein Zahnstangenteil aufweisenden Lenkgetriebes und einem daran anschließenden Gehäuseabschnitt für die Anordnung der hydraulischen Lenkunterstützung besteht. Dabei wird ein kalt umformbares Hohlprofil als Ausgangsprodukt in der Nähe eines durch Innenhochdruck umzuformenden Bereiches abgedichtet und nach Aufbringen des Innenhofdrucks mindestens ein Bereich einem kombinierten Innenhochdruck - Stülpziehverfahren unterworfen, wobei ein gesteuerter axialer Nachschub von Material vorgenommen werden kann. Dem Innenhochdruck nicht unterworfene Bereiche können kalibriert, durchgestellt bzw. abgestreckt werden.

Die EP 0 343 549 A2 betrifft ein Lenkgetriebe, bei dessen Gehäuse das Lenkschubstangengehäuse und das Lenkspindelgehäuse einstückig aus Kunststoff geformt sind und das Lenkschubstangengehäuse mit Anschlagflächen zur verformungsfreien Entformung versehen ist. Dabei ist die Wandstärke des Lenkgetriebegehäuses so gewählt, dass der Lagerdruck eines Drucksteins und einer Lenkschubstange wie auch die auftretenden Lenkspindel-Axialkräfte abgefangen werden können.

Die DE 100 47 231 C1 betrifft ein Verfahren sowie eine Vorrichtung zur Herstellung eines Rohres mit partiell unterschiedlichen Wandstärken, wobei in ein Ausgangsrohr ein mit mindestens einer außenseitigen, beidseitig in axialer Richtung begrenzten Vertiefung versehener Dorn eingeschoben wird, wobei anschließend ein Ziehring, dessen lichter Durchmesser kleiner ist als der Außendurchmesser des Ausgangsrohres, über das gegenüber dem Dorn in Ziehrichtung gehaltene Rohr gezogen wird. Dabei wird ein Teil des Rohres in die Vertiefung gedrückt.

Es ergibt sich also die Aufgabe der Erfindung, eine Zahnstangenlenkung mit einem optimierten Gewicht bei gleichzeitig kostengünstiger Herstellung zu ermöglichen. Diese Aufgabe wird durch die Zahnstangenlenkung nach Anspruch 1 erfüllt. Weitere vorteilhafte Weiterbildungen ergeben sich aus den Unteransprüchen. Die Ansprüche 12, 13 und 19 beschreiben eine Vorrichtung bzw. ein Verfahren zur Herstellung einer erfindungsgemäßen Zahnstangenlenkung.

Das Gehäuse einer Zahnstangenlenkung ist ein im Wesentlichen rohrförmiges Gebilde, in dessen Inneren sich die Zahnstange, gestützt durch Lager, in axialer Richtung bewegen kann. Angetrieben wird die Zahnstange durch eine Lenkstange mit daran befestigtem oder integriertem Ritzel, das mittels einer Passdurchgangsbohrung und entsprechender Gehäuseerweiterung mit den Zähnen der Zahnstange in Engriff gebracht wird. Die Aufgabe des Gehäuses ist es, die Zahnstange und das Lenkgetriebe vor Verschmutzung zu schützen und die auf Lenkung und Zahnstange wirkenden Kräfte aufzunehmen und in das Fahrzeugchassis oder die Karosserie abzuleiten. Bei Hilfskraftlenkungen, die hydraulisch angetrieben werden, dient das Gehäuse oft auch als Zylinder für das verwendete Hydrauliköl.

Die Kräfte, die auf das Gehäuse der Zahnstangenlenkung einwirken, können unterschiedliche Ursachen haben. Zum einen gibt es die Kräfte, die aus der Lenkbewegung und den Abtriebskräften der Kurvenfahrt auf das Gehäuse einwirken. Dazu kommen noch Kräfte aus Stößen durch Fahrbahnunebenheiten oder z.B. das Anstoßen gegen einen Randstein beim Rangieren. Zum anderen existiert zumindest bei hydraulisch angetriebenen Hilfskraftlenkungen der Innendruck des Öls, der auf die gesamte Gehäusewand einwirkt.

Es ergibt sich daher die Erfindungsidee, durch Optimierung der verwendeten Materialmenge mit einer Anpassung der Bauteilgeometrie an die aufzunehmenden Kräfte das Gewicht der Zahnstangenlenkung zu reduzieren.

Der Innendruck bei hydraulisch angetriebenen Hilfskraftlenkungen ist aus Gründen des Gleichgewichts im gesamten Innenraum des Gehäuses konstant und muss daher überall von der Gehäusewand aufgenommen werden. Deshalb kann die Aufnahme des Innendrucks durch das Gehäuse im Wesentlichen nur an geometrischen Unstetigkeitsstellen, wie z.B. Kanten oder Ecken, konstruktiv beeinflusst werden. In den übrigen Bereichen sind die durch den Innendruck entstehenden Kräfte praktisch überall gleich groß, so dass diese Kräfte überall gleichermaßen aufgenommen werden und beim Gehäuseentwurf berücksichtigt werden müssen.

Die übrigen oben genannten Kräfte werden aber punktuell in das Gehäuse eingebracht, z.B. an den Lagern der Zahnstange oder der Lenkstange oder auch an den Befestigungspunkten zwischen Gehäuse und Chassis/Karosserie. Diese punktuell eingeleiteten Kräfte verteilen sich auf den Querschnitt der Gehäusewand, so dass in einem Abstand von der Einleitungsstelle die Querschnittsbelastungen deutlich niedriger sind. Weiterhin ist man bei der Konstruktion des Gehäuses meist bestrebt, die Abstände zwischen möglichen Einleitungs- und Ableitungspunkten für Kräfte zur Verkürzung des Hebelarms und damit zur Verringerung eventuell auftretender Momente gering zu halten. Somit ist der hauptsächliche Kraftfluss durch das Gehäuse auf Teilbereiche der Gehäusewand beschränkt.

Durch das Anschweißen von Leitungen, Paßdurchgängen oder Befestigungseinrichtungen treten bei der Herstellung eines Gehäuses für eine Zahnstangenlenkung weitere Belastungen auf. Beim Schweißvorgang tritt unvermeidlich eine Erwärmung des Werkstücks auf, durch die wegen der Wärmeausdehnung des Stahls Spannungen entstehen, die vom Werkstück aufgenommen werden müssen. Ansonsten können diese Spannungen zu dauerhaften Verformungen führen, wodurch die Ausschußrate in der Produktion erhöht würde. Hinzu kommt, das bei Stahlgehäusen, die mittels Kaltverformung in die benötigte Gehäuseform umgeformt wurden, eine Verfestigung des Materials auftritt. Diese Verfestigung kann zumindest teilweise als Sicherheitsreserve bei der Bemessung des Bauteils genutzt werden. Durch den Wärmeeintrag beim Schweißen wird diese kaltverformungsbedingte Verfestigung aber lokal aufgehoben, so dass das Bauteil nicht mehr die notwendige Festigkeit aufweist und durch Belastungen bleibend verformt werden kann. Bei entsprechend ausreichenden Wandungsquerschnitten kann aber bei Schweißverfahren mit geringer Einbrandtiefe die Verfestigung durch Kaltverformung zumindest in Teilen des Wandungsquerschnitts erhalten werden, so dass die Festigkeit des Gesamtbauteils weiter gewährleistet bleibt. Daher können auch in Wandungsbereichen, die an oder sehr nahe bei Schweißpunkten liegen, die Wandungsquerschnitte nicht beliebig reduziert werden.

Im Rahmen der Erfindungsidee wird daher in den Teilbereichen, die eine geringere Spannung aufnehmen müssen und die entfernt von Schweißpunkten liegen, die Stärke der Gehäusewand reduziert. Da auch die reduzierte Gehäusewandstärke die in diesem Bereich anfallenden Spannungen übertragen kann, ist die Stabilität des Zahnstangenlenkungsgehäuses gewährleistet bei gleichzeitig erheblich reduziertem Materialbedarf und damit auch Gewicht.

Vorzugsweise wird ein erfindungsgemäßes Zahnstangenlenkungsgehäuse mit unterschiedlichen Gehäusewandstärken mittels eines Ziehringabstreckverfahrens auf einem oder mehreren Dornen hergestellt beziehungsweise umgeformt. Es sind aber auch alternative Verfahren wie Rundkneten, Rollumformen oder Kaltschmieden möglich. Dazu wird bei einer entsprechenden Vorrichtung ein Gehäuserohling, vorzugsweise ein Stahlrohr beispielsweise aus RST37, zunächst mit einem Formring an einem oder beiden Enden zur Bildung einer Mitnehmerkante umgeformt. Diese Mitnehmerkante muss eng genug sein, um mit der Spitze des Dorns eine formschlüssige Verbindung eingehen zu können. Anschließend wird der Dorn so in das Innere des Rohlings eingeführt, dass er formschlüssig an der Mitnehmerkante ansteht und so eine Bewegung des Gehäuserohlings längs zur Achse des Dorns verhindert. Der Dorn kann im Verlauf seiner Längsachse unterschiedliche Durchmesser aufweisen. Im weiteren Verlauf wird dann mittels mehrerer Ziehringe der Gehäuserohling auf den Dorn abgestreckt und derart umgeformt. Hierbei können Ziehringe mit unterschiedlichen Durchmessern je nach benötigter Wanddicke des Zahnstangenlenkungsgehäuses verwendet werden. Nach Fertigstellung des Abziehvorgangs wird der Gehäuserohling mittels eines Abstreifers vom Dorn abgestreift und an den Enden weiter bearbeitet. Je nach Anforderungen können die Enden mit einer Aufweitdorn und weiteren Ziehringen in Durchmesser und Wandstärke weiter angepaßt werden.

Die folgenden Figuren zeigen einige beispielhafte Ausführungsformen der Erfindung, Dabei zeigen:
- Fig. 1: Einen Längsschnitt durch eine erfindungsgemäße Zahnstangenlenkung mit dickeren und dünneren Gehäusewänden und einer direkt angeschweißten Ölleitung
- Fig. 2: Eine ungeschnittene Darstellung der Zahnstangenlenkung aus Fig. 1
- Fig. 3: Einen Schnitt durch eine Gehäuseerweiterung mit dickeren und dünneren Wänden
- Fig. 4: Einen Längsschnitt durch eine andere Ausführungsform einer erfindungsgemäßen Zahnstangenlenkung
- Fig.5: Eine weitere Ausführungsform einer erfindungsgemäßen Zahnstangenlenkung mit angeschweißten Leitungen
- Fig. 6: Ein Gehäuserohling bei Anformung der Mitnehmerkante
- Fig. 7: Die Umformung des Gehäuserohlings auf den Dorn mit den ersten Ziehring
- Fig. 8: Die weitere Umformung des Gehäuserohlings auf den Dorn mit dem zweiten Ziehring
- Fig. 9: Den Gehäuserohling auf dem Dorn nach der Umformung mit dem dritten Ziehring und vor dem Abstreifen durch den Abstreifer
- Fig. 10: Den Gehäuserohling bei der Endenbearbeitung
- Fig. 11: Den Gehäuserohling bei der Endaufweitung mit dem Aufweitdorn
- Fig. 12: Den fertig umgeformten Gehäuserohling

- Fig. 13 + 14: Eine weitere alternative Ausführungsform mit Flansch für die Sensor und Motorbefestigung

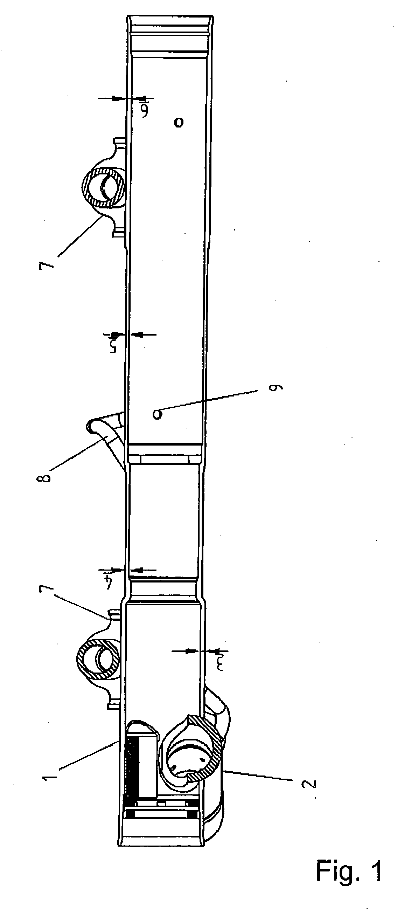

In Fig. 1 ist eine erfindungsgemäße Zahnstangenlenkung mit einem Gehäuse 1 und einer Gehäuseerweiterung 2 dargestellt. Im Bereich der Gehäuseerweiterung 2 Weist die Gehäusewand des Gehäuses 1 die Wandstärke 3 auf. Da durch die Gehäuseerweiterung 2 im Bereich eines Passdurchgangs zwischen Gehäuseerweiterung 2 und Gehäuse 1 die von der Lenkeinrichtung gedrehte Welle mit Zähnen in die komplementären Zähne der Zahnstange im Zahnstangenlenkungsgehäuse in Eingriff gebracht wird, können auf die Gehäusewand im Bereich der Gehäuseerweiterung 2 nicht unerhebliche Kräfte eingeleitet werden. Damit diese Kräfte aufgenommen werden können, ist das Gehäuse in diesem Bereich mit der dickeren Wandstärke 3 ausgeführt. Eine zusätzliche Krafteinleitung kann durch eine Befestigungsvorrichtung 7 bedingt sein, die ebenfalls die größere Wandstärke 3 in diesem Bereich bedingt. Vorzugsweise ist die Wandstärke in allen Bereichen des Gehäuse über den Gehäusequerschnitt in Gehäusequerrichtung konstant gehalten. Im Verlauf der Längsrichtung ändert sich die Wandstärke zur dünneren Wandstärke 4, dann nach einem kleinen Sprung im Gehäusewandverlauf zur Wandstärke 5, die gleich mit der Wandstärke 4 sein kann, aber nicht sein muss. Da im Bereich der Wandstärken 4 und 5 keine Krafteinleitungspunkte vorhanden sind, kann die Wandstärke hier reduziert werden, ohne dass es zu Stabilitätsproblemen kommt. Im weiteren Verlauf findet mit der Annäherung an eine Befestigungsvorrichtung 7 eine weitere Wandstärkenänderung zur Wandstärke 6 statt. Diese kann gleich der Wandstärke 3 sein, aber je nach Erfordernis auch kleiner oder größer. Außen am Gehäuse verläuft die Ölleitung 8, die im Bereich der Bohrung 9 mit dem Gehäuse verbunden ist.

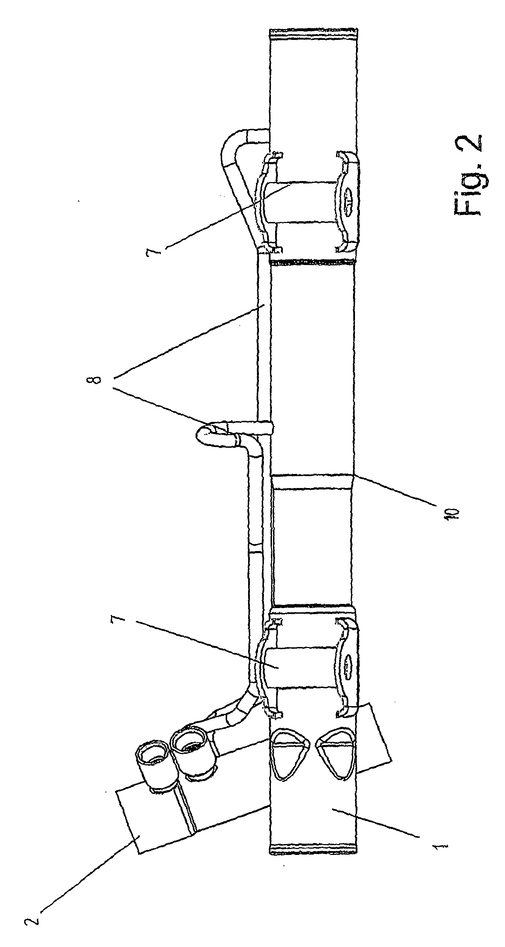

Fig. 2 zeigt das Gehäuse aus Fig. 1 von außen im geschlossenen Zustand. Im mittleren Bereich ist die Gehäuseumfangsänderung 10 zu erkennen. Mit der Gehäuseumfangsänderung kann auch die Wandstärke geändert werden, sie kann aber auch gleich bleiben. Die Leitungen 8 werden nahe am Gehäuse geführt und ermöglichen so eine kompakte Ausführung der gesamten Zahnstangenlenkung. Im Bereich der Befestigungshalter 7 und der Gehäuseerweiterung 2 sind Umfangsänderungen des Gehäuseumfangs zu erkennen, die in diesen Bereichen mit einer Wandstärkenerhöhung einhergeht. Um den Fertigungsaufwand möglichst niedrig zu halten, sind die einzelnen Komponenten der Zahnstangenlenkung, dass heißt, Gehäuse 1 und Gehäuseerweiterung 2, vorzugsweise jeweils einstückig ausgeführt. Mit einer Fertigung aus einem einheitlichen Material, vorzugsweise Stahl beispielsweise in der Stahlgüte RST37 können die Kosten weiter niedrig gehalten werden und überdies Korrosionsprobleme durch Bildung von Lokalelementen vermieden werden.

Die Ölleitungen 8 dienen der Hilfskraftunterstützung beim Lenken mittels einer hydraulischen Servoeinheit. Durch diese Leitungen wird eine Servoflüssigkeit im Arbeitskolbenbereich der Zahnstangenlenkung bewegt, mit der ein entsprechender Unterstützungsdruck zur leichteren Bewegung der Lenkung aufgebaut wird. Alternativ ist auch die Unterstützung der Lenkbewegung mittels eines Elektroantriebs möglich.

Die Wandstärken der dicken Wandbereiche 3 und 6 weisen vorzugsweise ein Dickenverhältnis zu den dünneren Wandungsabschnitten 4 und 5 von 1,3 zu 1 bis 1,6 zu 1 auf. Beispielsweise hat sich eine dickste Wandstärke von 3 mm und eine dünnste Wandstärke von 2 mm, eventuell mit Zwischenstufen, bei bestimmten Anforderungen als vorteilhaft erwiesen. Je nach Anforderungsprofil für die Zahnstangenlenkung sind aber auch andere Wandstärken denkbar.

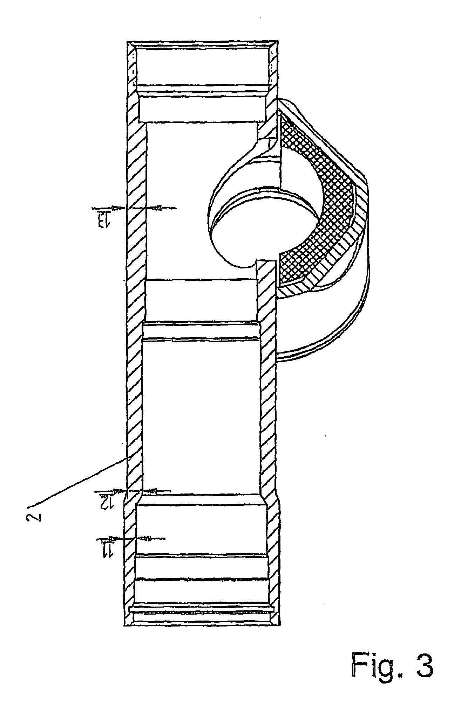

Fig. 3 zeigt die Gehäuseerweiterung 2 im Bereich des Passdurchgangs. Da auch bei der Gehäuseerweiterung 2 je nach Krafteinleitung unterschiedliche Belastungen auftreten, ändert sich die Wandstärke der Gehäuseerweiterung 2 vom dem Zahnstangengehäuse abgewandten Ende in Richtung des Zahnstangengehäuses 1. Zunächst ist die dünne und Gewicht sparende Wandstärke 11 vorgesehen, danach wird mit der Wandstärke 12 und dann 13 die Wandstärke sukzessive erhöht, um den in Richtung des Zahnstangengehäuses 1 weiter ansteigenden Belastungen gerecht zu werden.

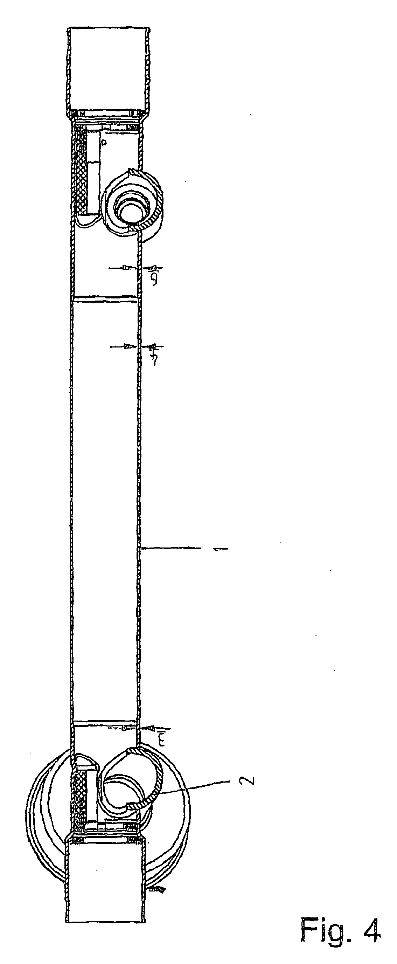

Fig. 4 zeigt eine weitere Ausführungsform, bei der der Aussendurchmesser des Gehäuses 2 konstant bleibt. Im Bereich der dickeren Wandstärken 3,6 wird der Innendurchmesser im Vergleich zum Bereich der dünneren Wandstärke 4 verringert, um derart eine dickere Gehäusewand in den stärker belasteten Bereichen der Befestigung und des Passdurchgangs zu erreichen. Diese Ausführungsform bietet sich vor allen bei elektrisch unterstützten Hilfskraftlenkungen an, bei denen auf Dichtringe im Gehäuseinneren verzichtet werden kann.

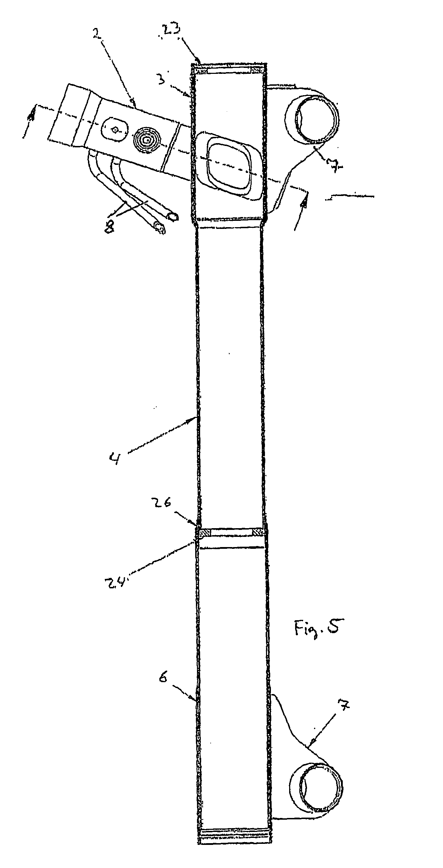

Figur 5 zeigt eine alternative Ausführungsform einer Zahnstangenlenkung mit hydraulischer Hilfskraftunterstützung. Das eigentliche Gehäuse mit Arbeitskolben für die Hilfskraftlenkung wird durch den rohrförmigen Gehäuseteil 1 gebildet. An der rechten Seite dieses rohrförmigen Gehäuseteils 1 befindet sich die Gehäuseerweiterung 2 mit den Druckleitungen 8 für das hydraulische Fluid zur Hilfskraftunterstützung. Am rechten Ende des Gehäuses 1 befindet sich die Lenkanschlagscheibe 23, die in den Gehäuseteil mit der Wandstärke 3 eingesetzt ist. Die Wandstärke 3 in diesem Bereich ist verstärkt ausgeführt, da einerseits durch die Gehäuseerweiterung 2, andererseits durch den Befestigungshalter 7 Kräfte in die Zahnstangenlenkung eingebracht werden. Auch bei der Herstellung des Zahnstangenlenkungsgehäuses treten in diesem Bereich Belastungen durch das Anschweißen des Befestigungshalters 7 und der Gehäuseerweiterung 2 auf, die durch die verstärkte Wanddicke übertragen werden.

Nach einem Übergangsbereich erfolgt in Längsrichtung des Gehäuses ein Gehäusebereich mit reduzierter Wandstärke 4, in dessen Verlauf keine Belastungsspitzen aufgenommen werden müssen, so dass der reduzierte Wanddurchmesser zur Übertragung der auftretenden Kräfte ausreichend ist. An einer Verdickungsstelle 26 befindet sich ein Dichtungshalter 24, zur Abdichtung des Arbeitskolbens, in dem sich das Fluid zur Hilfskraftunterstützung der Lenkbewegung befindet. Im weiteren Verlauf erhöht sich dann mit Annäherung an die linke Seite und den zweiten Befestigungshalter 7 die Wandstärke zur Wandstärke 6, um die am Gehäuseende wieder auftretenden erhöhten Lasteinträge ohne Verformung des Gehäuses abtragen zu können.

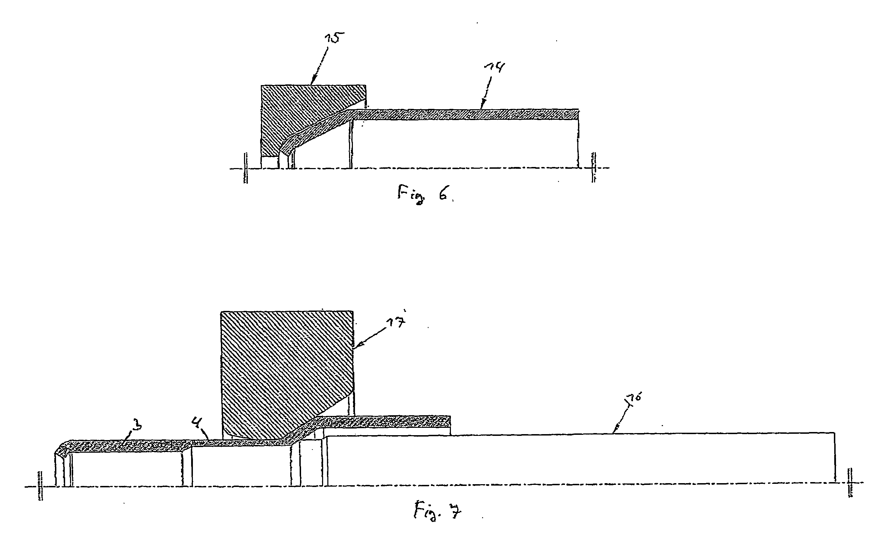

Die Figuren 6 bis 12 zeigen die verschiedenen Schritte bei der Herstellung eines erfindungsgemäßen Zahnstangenlenkungsgehäuses mittels eines Ziehringabstreckverfahrens. In Figur 6 wird ein Ende eines rohrförmigen Gehäuserohlings 14 mit dem Formring 15 zu einer Mitnehmerkante umgeformt. Dabei kann entweder der Formring oder der Gehäuserohling ortsfest gehalten werden, der jeweils andere Teil wird dann gegen den ortsfesten Teil gepreßt, so dass der Gehäuserohling 14 entsprechend umgeformt wird.

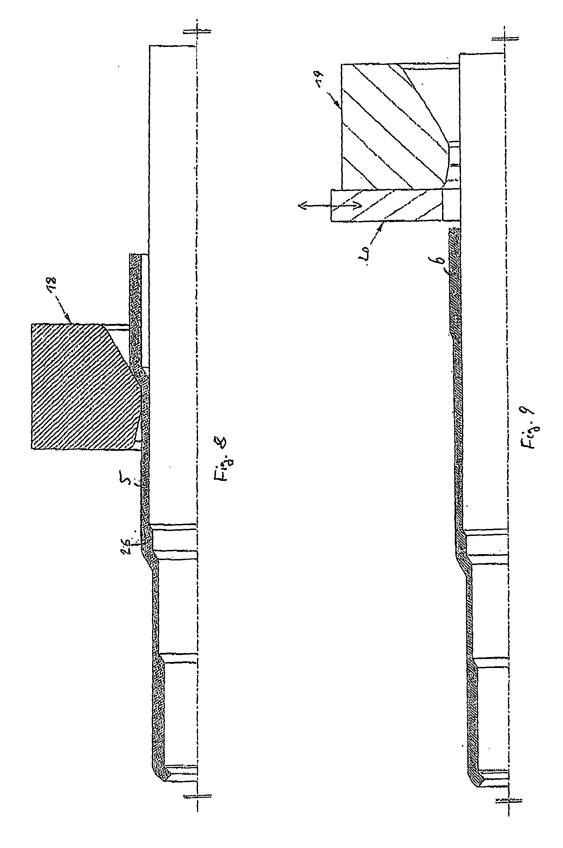

Figur 7 zeigt das Abstrecken des Gehäuserohlings 14 auf den Dorn 16 mittels eines ersten Ziehrings 17. Dabei entstehen im umgeformten Bereich ein dicker Wandungsabschnitt 3 und ein dünner Wandungsabschnitt 4. Mit dem zweiten Ziehring 18 wird, wie in Figur 8 dargestellt, ein größerer Außendurchmesser realisiert, wodurch ein kurzer, dicker Übergangsbereich 26 und ein nachfolgender, dünnerer Wandquerschnittsbereich 5 umgeformt wird. Nach dem Umformen des Wandquerschnittsbereichs 6 mit einem dickeren Wandungsquerschnitt durch den Ziehring 19 in Figur 9 kann der Gehäuserohling durch den Abstreifer 20, der quer zur Achse des Gehäuserohlings 14 beziehungsweise des Dorns 16 verschieblich ist, vom Dorn 16 abgestreift werden. Dazu wird der Abstreifer 20 so an den Dorn gefahren, das eine Seite zur Auflage an den Dorn kommt, während eine benachbarte Seite neben dem Ende des Gehäuserohlings angeordnet ist. Über eine Relativbewegung von Dorn 16 und Abstreifer 20 wird dann der Gehäuserohling 14 vom Dorn 16 abgestreift.

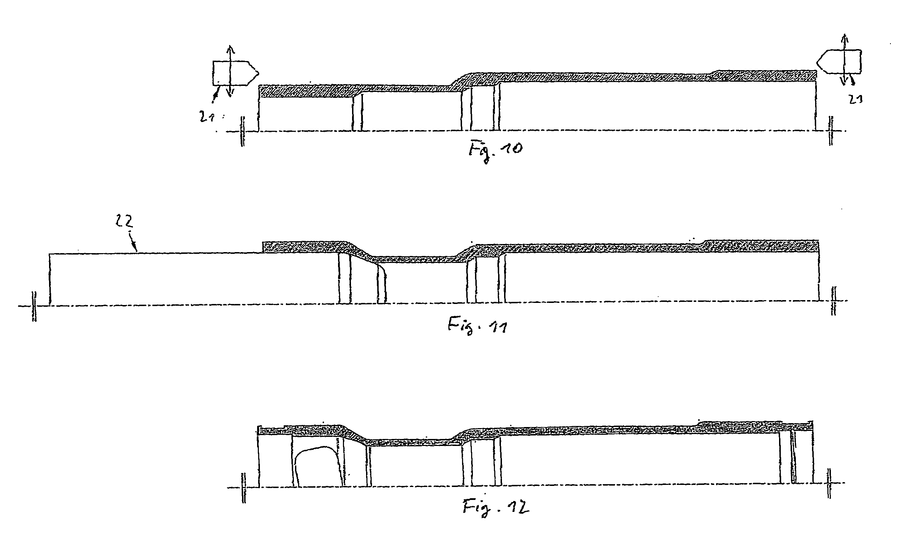

Wie in Figur 10 dargestellt, wird anschließend der Gehäuserohling durch die Bearbeitungswerkzeuge 21 an den Enden bearbeitet, um eine saubere Endfläche herzustellen. Anschließend wird mittels des Aufweitdorns 22, wie in Figur 11 dargestellt, ein Ende aufgeweitet, wobei je nach Bedarf auch ein weiterer Ziehring zur Herstellung unterschiedlicher Wandquerschnitte im Endbereich eingesetzt werden kann. Figur 12 zeigt dann das umgeformte Rohr mit weiterer Endbearbeitung, die hier nicht dargestellt ist, fertig vorbereitet für das Anfügen der Gehäuseerweiterung 2, Befestigungshalter 7 und Druckleitungen 8.

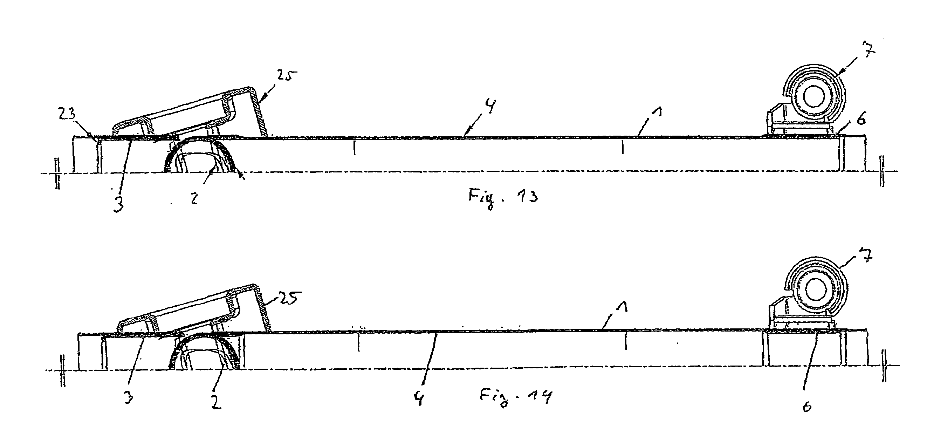

Figur 13 zeigt eine andere Ausführungsform eines erfindungsgemäßen Zahnstangenlenkungsgehäuses für eine elektrisch unterstützte Hilfskraftlenkung. Die Enden des Gehäuseteils 1 sind auch bei dieser Ausführungsform mit den erhöhten Wandstärken 3 und 6 ausgeführt, während der Mittelteil mit der reduzierten Wandstärke 4 ausgeführt ist. Die Gehäuseerweiterung 2 ist bei dieser Ausführungsform mit einem Flansch 25 zur Befestigung des Lenkbewegungssensors und des Motors zur Unterstützung der Lenkbewegung ausgestattet. Am der Gehäuseerweiterung 2 gegenüberliegenden Ende des Lenkungsgehäuses befindet sich der Befestigungshalter 7, am anderen Ende, nahe der Gehäuseerweiterung 2 ist die Lenkanschlagscheibe 23 am Gehäuseende ausgeführt. Der Innendurchmesser bei der Ausführungsform nach Figur 13 ist konstant, zur Erhöhung der Wandstärke ändert sich der Außendurchmesser. Figur 14 zeigt eine alternative Ausführungsform der Lenkung in Figur 13, bei der der Außendurchmesser konstant bleibt und der Innendurchmesser zur Erzeugung der unterschiedlichen Wandstärken angepaßt wird.

### Bezugszeichenliste

- 1: Gehäuse
- 2: Passdurchgangsbohrung mit Gehäuseerweiterung
- 3: Gehäusewand mit dickem Querschnitt
- 4: Gehäusewand mit dünnem Querschnitt
- 5: Gehäusewand mit dünnem Querschnitt
- 6: Gehäusewand mit dickem Querschnitt
- 7: Befestigungsvorrichtung für Verbindung zu Chassis/Karosserie
- 8: Direkt angeschweißte Ölleitung
- 9: Bohrung für direkt angeschweißte Ölleitung
- 10: Querschnittsänderung an der Gehäuseaussenseite
- 11,12,13: Gehäusewand Passdurchgang, Querschnitte von dünn zu dick
- 14: Gehäuserohling
- 15: Formring
- 16: Dorn
- 17,18, 19: Ziehring
- 20: Abstreifer
- 21: Werkzeuge zur Endenbearbeitung
- 22: Aufweitdorn
- 23: Lenkanschlagscheibe
- 24: Dichtungshalter
- 25: Flansch
- 26: verdickter Übergangsbereich
- 28: Luftausgleichsleitung

## Patentansprüche

1. Zahnstangenlenkung, insbesondere für Kraftfahrzeuge, mit einem länglichen, vorzugsweise im wesentlichen rohrförmigen Gehäuse (1) aus Stahl, das eine Zahnstange zur Führung umgibt, und mit mindestens einer Passdurchgangsbohrung mit einer Gehäuseerweiterung (2), worüber ein Ritzel zum Antrieb der und/oder Eingriff in die Zahnstange über eine Lenkstange betätigt werden kann, wobei das Gehäuse (1) im Verlauf seiner Längsachse Änderungen der Wandstärke beziehungsweise unterschiedliche Wandstärken (3,4,5,6,26) aufweist, **dadurch gekennzeichnet, dass** das Gehäuse (1) und/oder die Gehäuseerweiterung (2) in Bereichen mit Schweißpunkten eine dickere Wandung (3,6,13,26) als in sonstigen Bereichen (4,5,11,12) aufweist.

2. Zahnstangenlenkung nach Anspruch 1, **dadurch gekennzeichnet, dass** das Gehäuse (1) in Bereichen mit Kraftknotenpunkten eine dickere Wandung (3,6,13,26) als in sonstigen Bereichen (4,5,11,12) aufweist.

3. Zahnstangenlenkung nach Anspruch 1 oder 2, **dadurch gekennzeichnet, dass** die Gehäuseerweiterung (2) im Verlauf ihrer Längsachse Änderungen der Wandstärke beziehungsweise unterschiedliche Wandstärken (11,12,13) aufweist.

4. Zahnstangenlenkung nach einem der vorangehenden Ansprüche, **dadurch gekennzeichnet, dass** das Gehäuse (1) und/oder die Gehäuseerweiterung (2) aus einem einheitlichen Material, beispielsweise Stahl, gefertigt ist.

5. Zahnstangenlenkung nach einem der vorangehenden Ansprüche, **dadurch gekennzeichnet, dass** Mittel zur hydraulisch oder elektrisch angetriebenen Hilfskraft-Unterstützung vorgesehen sind.

6. Zahnstangenlenkung nach einem der vorangehenden Ansprüche, **gekennzeichnet durch** eine bauliche Integration von Anschlusseinrichtungen (7) zur Befestigung am Fahrzeugrahmen.

7. Zahnstangenlenkung nach einem der vorangehenden Ansprüche, **gekennzeichnet durch** einen oder mehrere Wandungsabschnitte mit einer ersten Dicke von 3 mm (dickerer Wandungsabschnitt) und einer zweiten Dicke von 2 mm (dünnerer Wandungsabschnitt).

8. Zahnstangenlenkung nach einem der vorangehenden Ansprüche, **dadurch gekennzeichnet, dass** die dickeren Wandungsabschnitte zu den dünneren Wandungsabschnitten ein Verhältnis der Wandstärken zwischen 1,3:1 und 1,6:1 aufweisen.

9. Zahnstangenlenkung nach einem der vorangehenden Ansprüche, **dadurch gekennzeichnet, dass** das Gehäuse (1) und/oder die Gehäuseerweiterung (2) durch ein Ziehring-Abstreckverfahren, durch Rundkneten, durch Rollumformen oder durch Kaltschmieden umgeformt ist.

10. Zahnstangenlenkung nach einem der vorangehenden Ansprüche, **dadurch gekennzeichnet, dass** das Gehäuse (1) und/oder die Gehäuseerweiterung (2) eine Festigkeitserhöhung durch Kaltverformung aufweisen.

11. Zahnstangenlenkung nach einem der vorangehenden Ansprüche, **gekennzeichnet durch** einen Flansch (25) an der Gehäuseerweiterung (2), der zur komplementären Aufnahme eines Flanschventils und/oder zur Befestigung eines Motors und/oder Sensors ausgebildet ist.

12. Vorrichtung zur Herstellung einer Zahnstangenlenkung mit einem Gehäuse (1), das unterschiedliche Wandstärken aufweist, mit mindestens einem Dorn (16) und mehreren dazu komplementären Ziehringen (17,18,19), wobei der Dorn (16) entlang seiner Längsrichtung unterschiedliche Durchmesser aufweist, und die Ziehringe (17,18,19) zum Kaltverformen eines Gehäuserohlings (14) mittels Abstrecken des Gehäuserohlings (14) auf den Dorn (16) ausgebildet sind.

13. Vorrichtung zur Herstellung einer Zahnstangenlenkung mit einem Gehäuse (1), das unterschiedliche Wandstärken aufweist, mit mindestens einem Dorn (16) und mehreren dazu komplementären Ziehringen (17,18,19), wobei der Dorn (16) entlang seiner Längsrichtung einen konstanten Durchmesser aufweist, und die Ziehringe (17,18,19) zum Kaltverformen eines Gehäuserohlings (14) mittels Abstrecken des Gehäuserohlings (14) auf den Dorn (16) mit interschiedlichen Innendurchmessern ausgebildet sind.

14. Vorrichtung zur Herstellung einer Zahnstangenlenkung nach Anspruch 12 oder 13, **gekennzeichnet durch** einen zweiten Dorn (22) zum Aufweiten einer Seite des Gehäuserohlings (14) nach erfolgter Umformung mit dem ersten Dorn (16) und dem oder den Ziehring(en) (17,18,19).

15. Vorrichtung zur Herstellung einer Zahnstangenlenkung nach Anspruch 14, **dadurch gekennzeichnet, dass** ein oder mehrere komplementäre Ziehring(e) zur Umformung des Gehäuserohlings (14) in Zusammenwirkung mit dem zweiten Dorn (22) ausgebildet sind.

16. Vorrichtung zur Herstellung einer Zahnstangenlenkung nach einem der Ansprüche 12 bis 15, **dadurch gekennzeichnet, dass** die Vorrichtung einen Formring (15) zum Anformen einer Mitnehmerkante an mindestens einem Ende des Gehäuserohlings (14) aufweist.

17. Vorrichtung zur Herstellung einer Zahnstangenlenkung nach einem der Ansprüche 12 bis 16, **dadurch gekennzeichnet, dass** die Vorrichtung einen Abstreifer bzw. Abstreifring (20) zum Abstreifen des Gehäuserohlings (14) vom Dorn (16) aufweist.

18. Vorrichtung zur Herstellung einer Zahnstangenlenkung nach einem der Ansprüche 12 bis 17, **gekennzeichnet durch** Einrichtungen (21) zur Endenbearbeitung des Gehäuserohlings (14).

19. Verfahren zur Herstellung einer Zahnstangenlenkung, insbesondere gemäß einem der Ansprüche 1 bis 11, mittels eines Ziehring-Abstreckverfahrens auf einen Dorn (16), mit folgenden Schritten:
i) Anformen einer Mitnehmerkante an zumindest ein Ende eines Gehäuserohlings (14) mittels eines Formrings (15);
ii) Abstrecken des Gehäuserohlings (14) bis zu einem vorher bestimmten Längenabschnitt auf den Dorn (16) mittels eines Ziehrings (17), der einen geringeren Innendurchmesser als der Außendurchmesser des Gehäuserohlings (14) aufweist;
iii) Abstreifen des Gehäuserohlings (14) vom Dorn (16) mittels eines Abstreifers bzw. Abstreifringes (20),
wobei der Schritt ii) mit jeweils einem weiteren Ziehring (18,19) mit anderem Innendurchmesser wiederholt wird, solange bis die verschiedenen gewünschten Außendurchmesser des Gehäuserohlings (14) ausgebildet sind.

20. Verfahren zur Herstellung einer Zahnstangenlenkung gemäß Anspruch 19, **gekennzeichnet durch** unterschiedliche, insbesondere größer werdende Durchmesser des Dorns (16) entlang seiner Längsachse.

21. Verfahren zur Herstellung einer Zahnstangenlenkung gemäß einem der Ansprüche 19 bis 20, **dadurch gekennzeichnet, dass** die Enden des Gehäuserohlings (14) nach dem Abstreifen vom Dorn (16) bearbeitet werden.

22. Verfahren zur Herstellung einer Zahnstangenlenkung gemäß einem der Ansprüche 19 bis 21, **dadurch gekennzeichnet, dass** eines oder beide Enden des Gehäuserohlings (14) mittels eines Aufweitdorns (22) aufgeweitet werden.

23. Verfahren zur Herstellung einer Zahnstangenlenkung gemäß Anspruch 22, **dadurch gekennzeichnet, dass** der Gehäuserohling (14) mittels eines oder mehrerer weiterer Ziehringe auf den Aufweitdorn (22) abgestreckt wird.

## Claims

1. A rack-and-pinion steering, in particular for motor vehicles, having an elongated, preferably substantially tubular housing (1) made of steel which surrounds a rack and pinion as a guide, and having at least one through bore-hole with a housing widening (2) by means of which a pinion for the driving of the and/or for engagement in the rack and pinion via a steering rod can be operated, the housing (1) having over the course of its longitudinal axis changes to the wall thickness or different wall thicknesses (3, 4, 5, 6, 26), **characterised in that** in regions with weld points the housing (1) and/or the housing widening (2) has a thicker wall (3, 6, 13, 26) than in other regions (4, 5, 11, 12).

2. The rack-and-pinion steering according to Claim 1, **characterised in that** in regions with force intersection points the housing (1) has a thicker wall (3, 6, 13, 26) than in other regions (4, 5, 11, 12).

3. The rack-and-pinion steering according to Claim 1 or 2, **characterised in that** over the course of its longitudinal axis the housing widening (2) has changes to the wall thickness or different wall thicknesses (11, 12, 13).

4. The rack-and-pinion steering according to any of the preceding claims, **characterised in that** the housing (1) and/or the housing widening (2) is produced from a uniform material, for example steel.

5. The rack-and-pinion steering according to any of the preceding claims, **characterised in that** mans for hydraulically or electrically driven auxiliary force support are provided.

6. The rack-and-pinion steering according to any of the preceding claims, **characterised by** a structural integration of connection devices (7) for attachment to the vehicle frame.

7. The rack-and-pinion steering according to any of the preceding claims, **characterised by** one or a number of wall sections with a first thickness of 3 mm (thicker wall section) and a second thickness of 2 mm (thinner wall section).

8. The rack-and-pinion steering according to any of the preceding claims, **characterised in that** the wall thickness ratio of the thicker wall sections to the thinner wall sections is between 1.3:1 and 1.6:1.

9. The rack-and-pinion steering according to any of the preceding claims, **characterised in that** the housing (1) and/or the housing widening (2) is shaped by a draw ring stretching method, by rotary swaging, by roll shaping or by cold forging.

10. The rack-and-pinion steering according to any of the preceding claims, **characterised in that** the housing (1) and/or the housing widening (2) has increased strength due to cold forming.

11. The rack-and-pinion steering according to any of the preceding claims, **characterised by** a flange (25) on the housing widening (2) which is formed for complementarily accommodating a flange valve and/or for attaching a motor and/or sensor.

12. An apparatus for the production of a rack-and-pinion steering having a housing (1) which has different wall thicknesses, having at least one spike (16) and a number of draw rings (17, 18, 19) complementary to the latter, the spike (16) having along its longitudinal direction different diameters, and the draw rings (17, 18, 19) being formed by stretching the housing blank (14) over the spike (16) for the cold forming of the housing blank (14).

13. An apparatus for producing a rack-and-pinion steering having a housing (1) which has different wall thicknesses, with at least one spike (16) and a number of draw rings (17, 18, 19) complementary to the latter, the spike (16) having along its longitudinal direction a constant diameter, and the draw rings (17, 18, 19) for cold forming a housing blank (14) by stretching the housing blank (14) over the spike (16) being formed with different inner diameters.

14. The apparatus for producing a rack-and-pinion steering according to Claim 12 or 13, **characterised by** a second spike (22) for widening one side of the housing blank (14) after shaping with the first spike (16) and the draw ring or rings (17, 18, 19) has been implemented.

15. The apparatus for producing a rack-and-pinion steering according to Claim 14, **characterised in that** one or more complementary draw ring(s) are formed for shaping the housing blank (14) in co-operation with the second spike (22).

16. The apparatus for producing a rack-and-pinion steering according to any of Claims 12 to 15, **characterised in that** the apparatus has a forming ring (15) for forming a drive lip on at least one end of the housing blank (14).

17. The apparatus for producing a rack-and-pinion steering according to any of Claims 12 to 16, **characterised in that** the apparatus has a scraper or scraping ring (20) for scraping the housing blank (14) off of the spike (16).

18. The apparatus for producing a rack-and-pinion steering according to any of Claims 12 to 17, **characterised by** devices (21) for the end processing of the housing blank (14).

19. A method for producing a rack-and-pinion steering, in particular according to any of Claims 1 to 11, by means of a draw ring stretching method over a spike (16) comprising the following steps:
i) moulding a drive lip onto at least one end of a housing blank (14) by means of a forming ring (15);
ii) stretching the housing blank (14) to a previously specified length section over the spike (16) by means of a draw ring (17) which has a smaller inner diameter than the outer diameter of the housing blank (14);
iii) scraping the housing blank (14) from the spike (16) by means of a scraper or scraping ring (20),
step (ii) being repeated with a respective further draw ring (18, 19) with a different inner diameter until the various desired outer diameters of the housing blank (14) have been formed.

20. The method for producing a rack-and-pinion steering according to Claim 19, **characterised by** different diameters, in particular diameters of the spike (16) which increase along its longitudinal axis.

21. The method for producing a rack-and-pinion steering according to any of Claims 19 and 20, **characterised in that** the ends of the housing blank (14) are processed after scraping away from the spike (16).

22. The method for producing a rack-and-pinion steering according to any of Claims 19 and 21, **characterised in that** one or both ends of the housing blank (14) are widened by means of a widening spike (22).

23. The method for producing a rack-and-pinion steering according to Claim 22, **characterised in that** the housing blank (14) is stretched out by means of one or a number of further draw rings over the widening spike (22).

## Revendications

1. Direction à crémaillère, en particulier pour véhicule automobile, comprenant un carter (1) longitudinal, de préférence essentiellement tubulaire, en acier, qui entoure une crémaillère destinée au guidage, et comprenant au moins un orifice de passage adapté avec une extension de carter (2), par laquelle un pignon peut être actionné pour entraîner et/ou s'engrener dans la crémaillère via une bielle de direction, dans laquelle le carter (1), sur le trajet de son axe longitudinal, présente des variations d'épaisseur de paroi ou présente diverses épaisseurs de paroi (3, 4, 5, 6, 26), **caractérisée en ce que** le carter (1) et/ou l'extension de carter (2) présente dans des zones avec points de soudure une paroi plus épaisse (3, 6, 13, 26) que dans les autres zones (4, 5, 11, 12).

2. Direction à crémaillère selon la revendication 1, **caractérisée en ce que** le carter (1) présente dans des zones avec points de jonction des forces une paroi plus épaisse (3, 6, 13, 26) que dans les autres zones (4, 5, 11, 12).

3. Direction à crémaillère selon la revendication 1 ou 2, **caractérisée en ce que** l'extension de carter (2), dans le trajet de son axe longitudinal, présente des variations d'épaisseur de paroi ou diverses épaisseurs de paroi (11, 12, 13).

4. Direction à crémaillère selon l'une des revendications précédentes, **caractérisée en ce que** le carter (1) et/ou l'extension de carter (2) est fabriqué(e) à partir d'un matériau homogène, par exemple l'acier.

5. Direction à crémaillère selon l'une des revendications précédentes, **caractérisée en ce que** sont prévus des moyens d'assistance par asservissement à entraînement hydraulique ou électrique.

6. Direction à crémaillère selon l'une des revendications précédentes, **caractérisée par** une intégration structurale de dispositifs de raccordement (7) destinés à une fixation sur le châssis du véhicule.

7. Direction à crémaillère selon l'une des revendications précédentes, **caractérisée par** un ou plusieurs segments de paroi présentant une première épaisseur de 3 mm (segment de paroi plus épais) et une seconde épaisseur de 2 mm (segment de paroi plus mince).

8. Direction à crémaillère selon l'une des revendications précédentes, **caractérisée en ce que** les segments de paroi plus épais présentent par rapport aux segments de paroi plus minces un rapport des épaisseurs de paroi compris entre 1,3:1 et 1,6:1.

9. Direction à crémaillère selon l'une des revendications précédentes, **caractérisée en ce que** le carter (1) et/ou l'extension de carter (2) est déformé(e) par un procédé d'étirage par bague d'étirage, par rétreint, par formage aux galets ou par forgeage à froid.

10. Direction à crémaillère selon l'une des revendications précédentes, **caractérisée en ce que** le carter (1) et/ou l'extension de carter (2) présente une augmentation de la résistance par déformation à froid.

11. Direction à crémaillère selon l'une des revendications précédentes, **caractérisée par** une bride (25) au niveau de l'extension de carter (2), qui est conçue pour loger de façon complémentaire une soupape à brides et/ou pour fixer un moteur et/ou un capteur.

12. Dispositif de fabrication d'une direction à crémaillère comportant un carter (1) qui présente diverses épaisseurs de paroi, avec au moins un mandrin (16) et plusieurs bagues d'étirage (17, 18, 19) qui lui sont complémentaires, dans lequel le mandrin (16) présente divers diamètres le long de son axe longitudinal, et dans lequel les bagues d'étirage (17, 18, 19) sont conçues pour forger à froid une ébauche de carter (14) par étirage de l'ébauche de carter (14) sur le mandrin (16).

13. Dispositif de fabrication d'une direction à crémaillère comportant un carter (1) qui présente diverses épaisseurs de paroi, avec au moins un mandrin (16) et plusieurs bagues d'étirage (17, 18, 19) qui lui sont complémentaires, dans lequel le mandrin (16) présente un diamètre constant le long de son axe longitudinal, et dans lequel les bagues d'étirage (17, 18, 19) sont conçues, pour déformer à froid une ébauche de carter (14) par étirage de l'ébauche de carter (14) sur le mandrin (16), avec des diamètres internes différents.

14. Dispositif de fabrication d'une direction à crémaillère selon la revendication 12 ou 13, **caractérisé par** un second mandrin (22) permettant d'élargir un côté de l'ébauche (14) suite à la déformation réussie avec le premier mandrin (16) et le ou les bagues d'étirage (17, 18, 19).

15. Dispositif de fabrication d'une direction à crémaillère selon la revendication 14, **caractérisé en ce qu'**une ou plusieurs bagues d'étirage complémentaires sont conçues pour déformer l'ébauche de carter (14) en coopération avec le second mandrin (22).

16. Dispositif de fabrication d'une direction à crémaillère selon l'une des revendications 12 à 15, **caractérisé en ce que** le dispositif présente un anneau de formage (15) destiné à former une arête d'entraînement au niveau d'au moins une extrémité de l'ébauche de carter (14).

17. Dispositif de fabrication d'une direction à crémaillère selon l'une des revendications 12 à 16, **caractérisé en ce que** le dispositif présente un racleur ou anneau de séparation (20) destiné à séparer l'ébauche de carter (14) du mandrin (16).

18. Dispositif de fabrication d'une direction à crémaillère selon l'une des revendications 12 à 17, **caractérisé par** des postes (21) de finition de l'ébauche de carter (14).

19. Procédé de fabrication d'une direction à crémaillère, en particulier selon l'une des revendications 1 à 11, au moyen d'un procédé d'étirage par bague d'étirage sur un mandrin (16), comportant les étapes suivantes :
i) formage d'une arête d'entraînement au niveau d'au moins une extrémité d'une ébauche de carter (14) au moyen d'un anneau de formage (15) ;
ii) étirage de l'ébauche de carter (14) jusqu'à un segment de longueur précédemment déterminé sur le mandrin (16) au moyen d'une bague d'étirage (17) qui présente un plus petit diamètre interne que le diamètre externe de l'ébauche de carter (14) ;
iii) séparation de l'ébauche de carter (14) du mandrin (16) au moyen d'un racleur ou d'un anneau de séparation (20),
dans lequel l'étape ii) est répétée avec chaque fois une autre bague d'étirage (18, 19) présentant un autre diamètre interne jusqu'à ce que les divers diamètres externes souhaités de l'ébauche de carter (14) soient obtenus.

20. Procédé de fabrication d'une direction à crémaillère selon la revendication 19, **caractérisé par** divers diamètres du mandrin (16) le long de son axe longitudinal, qui en particulier vont en s'élargissant.

21. Procédé de fabrication d'une direction à crémaillère selon la revendication 19 ou 20, **caractérisé en ce que** les extrémités de l'ébauche de carter (14) sont usinées après la séparation du mandrin (16).

22. Procédé de fabrication d'une direction à crémaillère selon l'une des revendications 19 à 21, **caractérisé en ce qu'**une ou les deux extrémités de l'ébauche de carter (14) est ou sont élargie(s) au moyen d'un mandrin d'écartement (22).

23. Procédé de fabrication d'une direction à crémaillère selon la revendication 22, **caractérisé en ce que** l'ébauche de carter (14) est étirée sur le mandrin d'écartement (22) au moyen d'une ou de plusieurs autres bagues d'étirage.
